(19) Europäisches Patentamt / European Patent Office / Office européen des brevets

(11) **EP 2 790 307 A2**

(12) **EUROPEAN PATENT APPLICATION**

(43) Date of publication:
**15.10.2014 Bulletin 2014/42**

(51) Int Cl.:
***H02K 21/12*** *(2006.01)*

(21) Application number: **14163850.2**

(22) Date of filing: **08.04.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.04.2013 JP 2013080699**

(71) Applicant: **Kabushiki Kaisha Yaskawa Denki
Kitakyushu-shi, Fukuoka 806-0004 (JP)**

(72) Inventor: **Morishita, Daisuke
Kitakyushu-shi, Fukuoka 806-0004 (JP)**

(74) Representative: **Viering, Jentschura & Partner
Patent- und Rechtsanwälte
Grillparzerstrasse 14
81675 München (DE)**

(54) **Rotating electrical machine**

(57) A rotating electrical machine (10) includes a rotor (12) and a stator (11). A permanent magnet (12b) is attached to the rotor (12). The stator (11) opposes the rotor (12) with a gap (g) provided therebetween, and has an open slot (11b) that opens toward the rotor (12) and in which a high-voltage wire (C) is installed. The gap (g) has a gap length ($\delta$) at which the sum of losses including a surface loss that occur when the high-voltage wire (C) is excited and the rotor (12) is rotated at a high rotation speed is less than or equal to a threshold that corresponds to a target loss.

## FIG. 1

EP 2 790 307 A2

**Description**

BACKGROUND OF THE INVENTION

1. Field of the Invention

The embodiments disclosed herein relate to a rotating electrical machine.

2. Description of the Related Art

Rotating electrical machines including rotors having permanent magnets attached thereto have been commonly used for, for example, general industrial applications (see, for example, Japanese Unexamined Patent Application Publication No. 2001-028852).

More specifically, Japanese Unexamined Patent Application Publication No. 2001-028852 describes a rotating electrical machine including a rotor and a stator. The rotor includes a rotor core having a stacked structure and permanent magnets embedded in the rotor core. The stator is arranged concentrically with the rotor with an air gap (hereinafter referred to simply as a "gap") provided therebetween.

The stator has semi-closed-type wire slots (hereinafter referred to as "semi-closed slots") in an inner peripheral region thereof. The width of the semi-closed slots in the circumferential direction is smaller at the openings than at the inner regions of the semi-closed slots. Low-voltage wires are generally installed in the semi-closed slots.

The stator may instead have open-type wire slots (hereinafter referred to as "open slots") in the inner peripheral region thereof. The width of the open slots in the circumferential direction is substantially the same between the openings and the inner regions of the open slots. Low-voltage wires and high-voltage wires are installed in the open slots.

Since the surface loss increases in proportion to the width of the slots in the circumferential direction at the openings of the slots, stators having open slots are often used for low-speed rotation applications.

However, in recent years, there has been a need for a combination of the rotor having the permanent magnets and the stator having the open slots for high-speed rotation applications. To meet such a need, the above-described technology according to the related art has room for improvements in achieving low-loss, high-efficiency high-speed rotation.

More specifically, in the rotating electrical machine according to the related art, the size of the gap (gap length) is preferably made as small as possible to reduce the amount of permanent magnets that are used. However, the gap magnetic flux density increases as the gap length decreases, and the surface loss increases as a result. Furthermore, when the above-described open slots are used, the surface loss is further increased.

Thus, it can be said that the combination of the rotor having the permanent magnets and the stator having the open slots is greatly affected by the surface loss. Since the rotor is heated when the surface loss is increased, the influence of demagnetization due to heat increases. Therefore, even when the gap length is reduced, it is difficult to reduce the amount of permanent magnets that are used.

Although the surface loss can be reduced by increasing the gap length, it is still difficult to reduce the amount of permanent magnets that are used, and the sum of the losses including the surface loss, iron loss, and copper loss (hereinafter referred to as "total loss") is increased.

SUMMARY OF THE INVENTION

An embodiment has been made in light of the above-described circumstances, and an object of the embodiment is to provide a rotating electrical machine capable of achieving a low-loss, high-efficiency high-speed rotation.

A rotating electrical machine according to an embodiment includes a rotor and a stator. A permanent magnet is attached to the rotor. The stator opposes the rotor with a gap provided therebetween, and has an open slot that opens toward the rotor and in which a high-voltage wire is installed. The gap has a gap length at which the sum of losses including a surface loss that occur when the high-voltage wire is excited and the rotor is rotated at a high rotation speed is less than or equal to a threshold that corresponds to a target loss.

According to this embodiment, a low-loss, high-efficiency high-speed rotation can be achieved.

BRIEF DESCRIPTION OF THE DRAWINGS

Fig. 1 illustrates the schematic structure of a rotating electrical machine according to an embodiment.
Fig. 2 is a schematic perspective view illustrating the basic inner structure of the rotating electrical machine according to the embodiment.

Fig. 3A is a schematic sectional view of Fig. 2 taken along line IIIA-IIIA.

Fig. 3B illustrates a relational equation of surface loss.

Fig. 4 is a graph showing variations in losses with respect to gap length.

Fig. 5 is a graph showing variations in losses excluding the surface loss with respect to gap length.

Fig. 6 is a graph showing an example in which another threshold is used.

DESCRIPTION OF THE EMBODIMENTS

A rotating electrical machine according to an embodiment of the present disclosure will now be described in detail with reference to the accompanying drawings. The present disclosure is not limited to the following embodiment.

In the following description, the rotating electrical machine according to the embodiment is denoted by reference numeral "10". Although an example in which the rotating electrical machine 10 is a motor will be described, the rotating electrical machine 10 may instead be a generator.

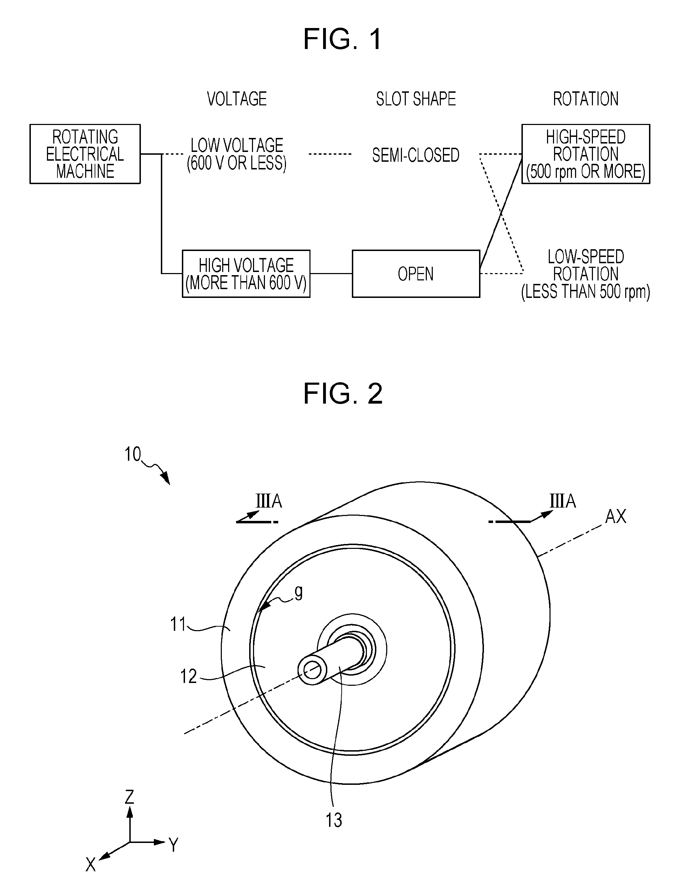

The schematic structure of the rotating electrical machine 10 according to the embodiment will be described with reference to Fig. 1. Fig. 1 is a diagram illustrating the schematic structure of the rotating electrical machine 10 according to the embodiment. Referring to Fig. 1, "rotating electrical machines" are classified under three categories, which are "voltage", "slot shape", and "rotation". In Fig. 1, the structure of the rotating electrical machine 10 according to the present embodiment corresponds to the combination of elements connected to each other by the solid line.

Referring to Fig. 1, in general, the "rotating electrical machines" can be classified depending on whether the "voltage" is "low voltage" or "high voltage". The "voltage" is, for example, a rated voltage. When the "low voltage" is 600 V (volts) or less, the "high voltage" is more than 600 V.

The "rotating electrical machines" can also be classified depending on whether the "slot shape" is "semi-closed" or "open". Low-voltage wires are generally installed in the "semi-closed" slots. The low-voltage wires are wound by a winding method called "distributed winding" in which wires of respective phases are installed separately from each other along a plurality of "semi-closed" slots.

In contrast, low-voltage wires and high-voltage wires are installed in the "open" slots. In the "open" slots, the wires are wound by, for example, a winding method called "concentrated winding" in which the wires are installed in the adjacent slots in a concentrated manner.

The "rotating electrical machines" can also be classified depending on whether the "rotation" thereof is "high-speed rotation" or "low-speed rotation". When the "low-speed rotation" is a rotation at "less than 500 rpm

(rotation per minute)", the "high-speed rotation" is a rotation at "500 rpm or more".

As illustrated in Fig. 1, the rotating electrical machine 10 according to the embodiment is a "high voltage" motor for "high-speed rotation" applications in which "high voltage" wires are installed in "open" slots. In the rotating electrical machine "10" of the present embodiment, the wires are wound by the distributed winding method.

The basic inner structure of the rotating electrical machine 10 according to the embodiment will now be described with reference to Fig. 2. Fig. 2 is a schematic perspective diagram illustrating the basic inner structure of the rotating electrical machine 10 according to the embodiment.

To facilitate understanding of the description, a three-dimensional orthogonal coordinate system including a Z-axis pointing vertically upward is illustrated in Fig. 2. This orthogonal coordinate system may also appear in other figures that are referred to in the following description.

In the following description, with regard to identical components, only one or some of the components may be denoted by a reference numeral while the remaining components are drawn without a reference numeral. In such a case, it is to be assumed that the remaining components have a structure similar to that of the components denoted by a reference numeral.

Structures other than the structure illustrated in Fig. 2 (for example, the outer structure) are not particularly limited, and descriptions thereof are thus omitted in the present embodiment.

As illustrated in Fig. 2, the rotating electrical machine 10 includes a stator 11, a rotor 12, and a shaft 13.

The stator 11 is a substantially cylindrical member formed by, for example, stacking a plurality of sheet members, such as magnetic steel sheets (magnetic-steel-sheet stack). The outer peripheral surface of the stator 11 is fixed to, for example, an inner peripheral surface of a motor frame (not shown).

The rotor 12 faces the inner peripheral surface of the stator 11 with a gap g, which is a predetermined air gap, provided therebetween. The rotor 12 is also a magnetic-steel-sheet stack having a substantially cylindrical shape. The shaft 13 extends through a central portion of the rotor 12 in the X axis direction in Fig. 1.

The shaft 13 is supported by bearings (not shown) provided at the load side and the side opposite to the load side, so that the rotor 12 is freely rotatable around the axis AX shown in Fig. 2.

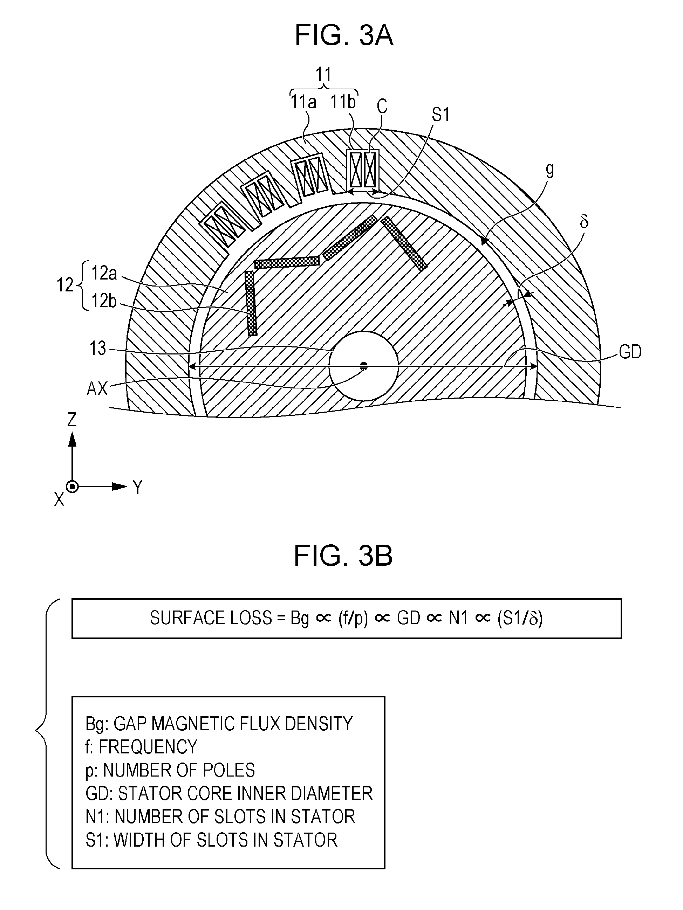

Next, the inner structure of the rotating electrical machine 10 will be described in more detail with reference to a sectional view along a YZ plane including line IIIA-IIIA shown in Fig. 2. Fig. 3A is a schematic sectional view of Fig. 2 taken along line IIIA-IIIA.

As illustrated in Fig. 3A, the stator 11 includes a stator core 11a and open slots 11b. The stator core 11a is a main part of the stator 11, which is the above-described magnetic-steel-sheet stack. Referring to Fig. 3A, "GD" represents the inner diameter of the stator core 11a.

The open slots 11b have openings that open toward the rotor 12. The open slots 11b are spaces arranged in the circumferential direction of the stator core 11a. Although Fig. 3A shows only four open slots 11b for simplification, the number of open slots 11b is not limited.

The open slots 11b are formed so that the width of the openings thereof in the circumferential direction is substantially the same as the width of the inner regions thereof in the circumferential direction. In the present embodiment, it is assumed that the width of the openings in the circumferential direction is equal to that of the inner regions in the circumferential direction, and the width may be referred to as a "stator slot width S1" in the following description.

As described above, high-voltage wires C are installed in the open slots 11b. The stator 11 opposes the rotor 12 with the gap g provided therebetween, as described above. The gap g has a gap length $\delta$.

As illustrated in Fig. 3A, the rotor 12 includes a rotor core 12a and permanent magnets 12b. The rotor core 12a is a main part of the rotor 12, which is the above-described magnetic-steel-sheet stack. The permanent magnets 12b are arranged in the circumferential direction of the rotor core 12a by being, for example, embedded in the rotor core 12a.

Although Fig. 3A shows only four permanent magnets 12b for simplification, the number of permanent magnets 12b is not limited. In Fig. 3A, the permanent magnets 12b are arranged so that the adjacent permanent magnets 12b form a shape like an inverted letter 'V' and the distance therebetween decreases toward the outer periphery of the rotor core 12a. However, the arrangement of the permanent magnets 12b is not limited.

In the above-described inner structure, when the high-voltage wires C disposed in the stator 11 are excited, a rotating magnetic field is generated in the stator 11. Owing to the interaction between the rotating magnetic field and the magnetic field generated by the permanent magnets 12b, the rotor 12 and the shaft 13 are rotated at a high rotation speed of 500 rpm or more.

In the rotating electrical machine 10, which is of the permanent magnet type, the gap length $\delta$ of the gap g is preferably made as small as possible to reduce the amount of permanent magnets 12b that are used. However, the gap magnetic flux density increases as the gap length $\delta$ decreases, and the surface loss increases as a result.

Fig. 3B shows a relational equation of the surface loss. The relational equation is obtained as a result of verification of experiments performed in the present embodiment. Referring to Fig. 3B, "Bg" represents the gap magnetic flux density, "f" represents the frequency, "p" represents the number of poles, and "N1" represents the number of open slots 11b (hereinafter referred to as the "number of stator slots").

Referring to Fig. 3B, according to the result of verification performed in the present embodiment, the surface loss can be expressed as follows:

$$\text{Surface Loss} = Bg \propto (f/p) \propto GD \propto N1 \propto (S1/\delta) \qquad (1)$$

As is clear from Equation (1), since the surface loss is proportional to the gap magnetic flux density Bg, the surface loss is increased when the gap length $\delta$ is reduced. In addition, as is clear from the fact that the surface loss is proportional to (frequency f)/(number of poles p), the surface loss is easily increased in high-speed rotation applications.

The surface loss is also easily increased when the inner diameter GD of the stator core 11a or the number of stator slots N1 is increased. When the high-voltage wires C are used, the stator slot width S1 is increased, and therefore the surface loss is also easily increased. In permanent-magnet-type rotating electrical machines, thermal demagnetization may occur when the surface loss is increased. Therefore, it becomes difficult to reduce the amount of permanent magnets 12b that are used.

More specifically, when the combination of "high voltage", "open" slots, and "high-speed rotation" is applied as illustrated in Fig. 1, it is important to take the surface loss into consideration.

Even when the surface loss is simply reduced by increasing the gap length $\delta$, it is still difficult to reduce the amount of permanent magnets 12b that are used. In addition, total loss including so-called fixed loss (mainly iron loss) and load loss (mainly copper loss) is increased.

Accordingly, in the present embodiment, an appropriate gap length $\delta$ is selected in consideration of the balance between the above-described surface loss and the total loss, so that the amount of permanent magnets 12b that are used can be reduced and the rotating electrical machine 10 can be configured to achieve a low-loss, high-efficiency high-speed rotation. The method for selecting the appropriate gap length $\delta$ will now be described with reference to an example of verification data used in the present embodiment.

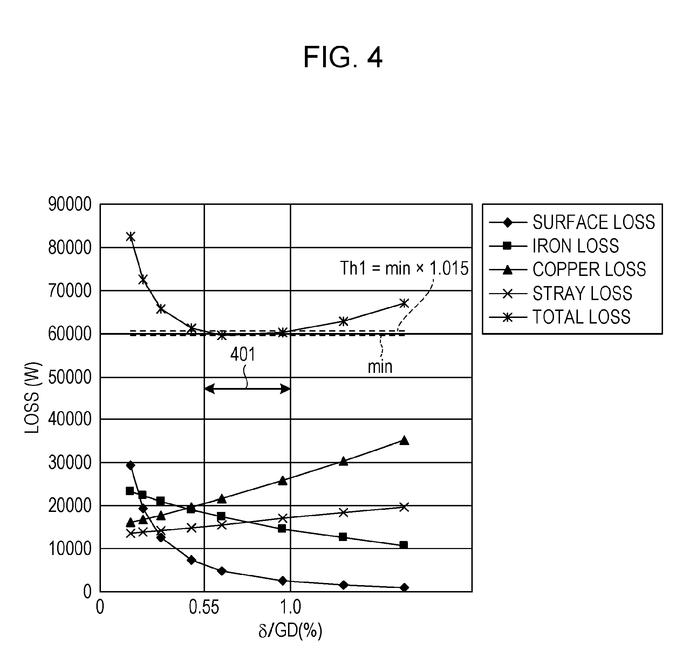

Fig. 4 is a graph showing variations in losses with respect to the gap length $\delta$. In the present embodiment, to select the appropriate gap length δ, verification data showing the relationships between the gap length δ and the losses as illustrated in Fig. 4 is acquired.

As illustrated in Fig. 4, the losses include the surface loss, the iron loss, which is the main component of the fixed loss, the copper loss, which is the main component of the load loss, and stray loss, such as leakage magnetic flux. The total loss, that is, the sum of the losses, is also acquired.

The verification data may be measured values obtained by rotating the rotor 12 at a high rotation speed while changing the gap length δ, or simulated values obtained by using, for example, a function including the gap length δ as a parameter.

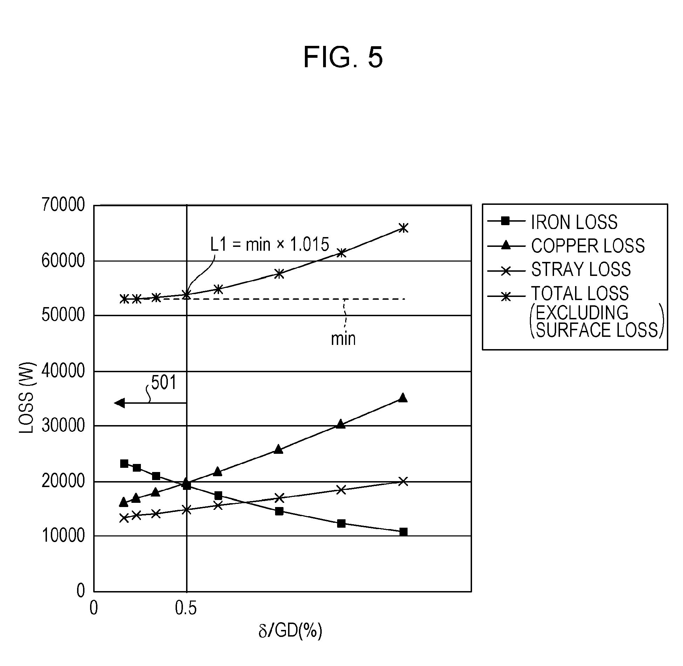

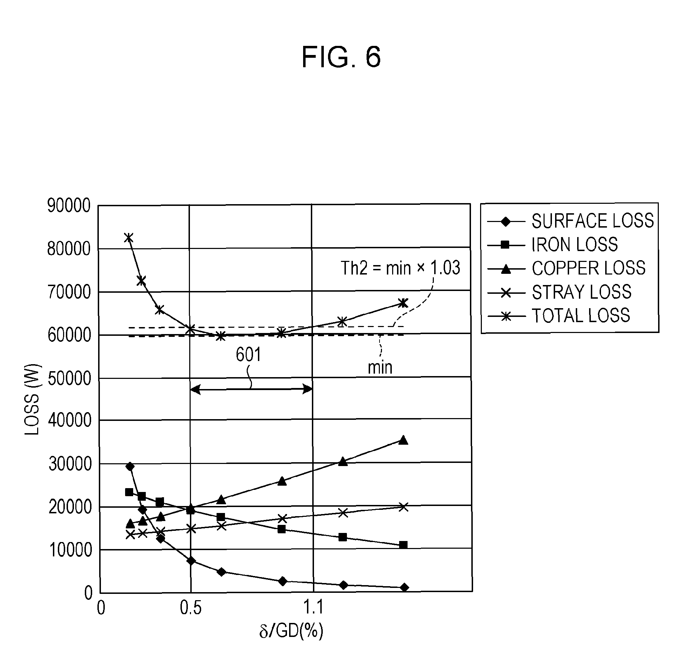

Here, it is assumed that the verification data shown in Fig. 4 (and Figs. 5 and 6 described below) are simulated values. In Figs. 4 to 6, the horizontal axis represents the ratio δ/GD of the gap length δ to the inner diameter GD of the stator core 11a.

In the present embodiment, the surface loss is included in the verification data. More specifically, in the present embodiment, the gap length δ is selected so that the sum of losses including the surface loss that occur when the high-voltage wires C are excited and the rotor 12 is rotated at a high rotation speed (that is, the total loss) is less than or equal to a threshold Th1 that corresponds to a target loss.

Thus, when the combination of "high voltage", "open" slots, and "high-speed rotation" is applied as described above, that is, when the influence of the surface loss is large, low-loss, high-efficiency high-speed rotation can be achieved.

The threshold Th1, which corresponds to the target loss, is to be determined before selecting the gap length δ. An example of the method for determining the threshold Th1 will now be described with reference to Fig. 5.

Fig. 5 is a graph showing variations in losses excluding the surface loss with respect to the gap length δ. This can be considered as an example of the related art in which the surface loss is not taken into consideration. In general, with regard to the losses of a rotating electrical machine, the efficiency is expected to be at a maximum when the iron loss and the copper loss are substantially equal to each other.

In the graph of Fig. 5 in which the surface loss is not taken into consideration, the iron loss and the copper loss are substantially equal to each other when the ratio δ/GD is 0.5%. Therefore, according to the related art in which the surface loss is not taken into consideration, the gap length δ is selected so that the ratio δ/GD satisfies δ/GD ≤ 0.5% (see arrow 501 in Fig. 5).

The threshold Th1 to be used in the case where the surface loss is taken into consideration, as shown in Fig. 4, in the present embodiment may be determined on the basis of the total loss L1 for δ/GD = 0.5% in Fig. 5.

More specifically, when the total loss L1 for δ/GD = 0.5% in the case where the surface loss is not taken into consideration as illustrated in Fig. 5 is 1.5% greater than the minimum value min of the total loss (L1 = min×1.015), the range of up to the value that is 1.5% greater than the minimum value min may be determined as the allowable range of the total loss (that is, the target loss) in the case where the surface loss is taken into consideration as illustrated in Fig. 4. In such a case, the threshold Th1 shown in Fig. 4 is determined as Th1 = min×1.015 (see Fig. 4).

When the threshold Th1 is determined as described above, the optimum ratio δ/GD that corresponds to the target loss in the case where the surface loss is taken into consideration as illustrated in Fig. 4 is 0.55% or more and 1.0% or less. Therefore, in this case, the gap length δ may be selected so that the ratio δ/GD satisfies 0.55% ≤ δ/GD ≤ 1.0% (see arrow 401 in Fig. 4).

Fig. 4 shows an example in which the threshold Th1 is set to the value that is 1.5% greater than the minimum value min, that is, 101.5% of the minimum value min. However, the threshold Th1 may instead be set to a value that is less than 101.5% of the minimum value min to further reduce the loss.

Thus, the appropriate gap length δ can be selected in consideration of the balance between the surface loss and the total loss. In the examples illustrated in Figs. 4 and 5, the ratio δ/GD satisfies 0.55% ≤ δ/GD ≤ 1.0% when the surface loss is taken into consideration, and δ/GD ≤ 0.5% when the surface loss is not taken into consideration. Thus, the ranges of the gap length δ do not overlap.

Thus, the selected gap length δ clearly differs between the case in which the surface loss is taken into consideration and the case in which the surface loss is not taken into consideration. In other words, the manufacturing process clearly differs depending on whether or not the configuration illustrated in Fig. 1 is employed. Therefore, the efficiency of the manufacturing process can be improved.

In the above-described example, the threshold Th1 is determined on the basis of the total loss L1 at which the iron loss and the copper loss are substantially equal to each other in the case where the surface loss is not taken into consideration. However, the threshold may instead be determined on the basis of a total loss that is generally allowable or a value to which the gap length δ can be set.

This will be described with reference to Fig. 6. Fig. 6 shows the case where another threshold Th2 is used. The verification data shown in Fig. 6 is the same as that in Fig. 4.

For example, assume that the allowable range of the total loss is generally up to 3% of the minimum value min. In this case, as illustrated in Fig. 6, the threshold Th2 may be set to a value that is 103% of the minimum value min.

In the case where the threshold Th2 that corresponds to the target loss is the value that is 3% greater than the minimum value min, the ratio δ/GD in the case where the surface loss is taken into consideration as illustrated in Fig. 6 is 0.5% or more and 1.1% or less. Therefore, in this case, the gap length δ may be selected so that the ratio δ/GD satisfies 0.5% ≤ δ/GD ≤ 1.1% (see arrow 601 in Fig. 6).

In the case where the surface loss is not taken into consideration, the value to which the gap length δ can be set is such that the ratio δ/GD is 0.6% or less. In this case, the ratio δ/GD satisfies 0.5% ≤ δ/GD ≤ 1.1% when the surface loss is taken into consideration, and δ/GD ≤ 0.6% when the surface loss is not taken into consideration. Therefore, unlike the examples illustrated in Figs. 4 and 5, the ranges of the gap length δ partially overlap.

In this case, the gap length δ for when the surface loss is taken into consideration and that for when the surface loss is not taken into consideration may be set to the same value, and there is an advantage that, for example, a common manufacturing step may be employed in both cases.

Fig. 6 shows an example in which the threshold Th2 is 103% of the minimum value min. However, the threshold Th2 may instead be set to a value that is less than 103% of the minimum value min to further reduce the loss.

In general, induction motors having a rated output of 500 kw (kilowatts) or more and 5000 kw or less are relatively easy to manufacture when the gap length δ of the gap g is set so that the ratio δ/GD satisfies 0.37% ≤ δ/GD ≤ 0.9%.

This may be applied to the rotating electrical machine 10, which is of the permanent magnet type. More specifically, in the case where the threshold Th1 illustrated in Fig. 4 is used, the manufacturing efficiency can be improved by selecting the gap length δ so that the ratio δ/GD satisfies 0.55% ≤ δ/GD ≤ 0.9%.

Similarly, in the case where the threshold Th2 illustrated in Fig. 6 is used, the manufacturing efficiency can be improved by selecting the gap length δ so that the ratio δ/GD satisfies 0.5% ≤ δ/GD ≤ 0.9%.

As described above, the rotating electrical machine according to the embodiment includes a rotor and a stator. Permanent magnets are attached to the rotor. The stator opposes the rotor with a gap provided therebetween, and has open slots that open toward the rotor and in which high-voltage wires are installed. The gap has a gap length at which the sum of losses including a surface loss that occur when the high-voltage wires are excited and the rotor is rotated at a high rotation speed is less than or equal to a threshold that corresponds to a target loss.

Therefore, the rotating electrical machine according to the embodiment is capable of performing low-loss, high-efficiency high-speed rotation.

In the above-described embodiment, the high-voltage wires are installed in the open slots. The surface loss may be initially reduced depending on the winding method of the high-voltage wires.

More specifically, the surface loss that is generated may be reduced by installing the high-voltage wires in the open slots in the fractional slot winding configuration, in which the number of slots per pole per phase is a fraction. In this case, the threshold corresponding to the target loss may be determined by taking into account the amount of reduction in the surface loss that can be achieved by the fractional slot winding configuration.

Further advantages and modifications can be easily derived by those skilled in the art. Therefore, broader embodiments of the present disclosure are not limited to the specific detailed and typical embodiment described herein. Accordingly, various modifications are possible without departing from the spirit or scope of the general concept of the present disclosure that is defined by the scope of the appended claims or the equivalents thereof.

**Claims**

1. A rotating electrical machine (10) comprising:

   a rotor (12) to which a permanent magnet (12b) is attached; and
   a stator (11) that opposes the rotor (12) with a gap (g) provided therebetween and has an open slot (11b) that opens toward the rotor (12) and in which a high-voltage wire (C) is installed,
   wherein the gap (g) has a gap length (δ) at which the sum of losses including a surface loss that occur when the high-voltage wire (C) is excited and the rotor (12) is rotated at a high rotation speed is less than or equal to a threshold that corresponds to a target loss.

2. The rotating electrical machine (10) according to Claim 1, wherein the high rotation speed is 500 rpm or more.

3. The rotating electrical machine (10) according to Claim 1 or 2, wherein the threshold is a value that is less than or equal to 101.5% of a minimum value of the sum.

4. The rotating electrical machine (10) according to Claim 1 or 2, wherein the threshold is a value that is less than or equal to 103% of a minimum value of the sum.

5. The rotating electrical machine (10) according to Claim 3, wherein a ratio of the gap length (δ) to an inner diameter (GD) of the stator (11) is 0.55% or more and 1% or less.

6. The rotating electrical machine (10) according to Claim 4, wherein a ratio of the gap length ($\delta$) to an inner diameter (GD) of the stator (11) is 0.5% or more and 1.1% or less.

7. The rotating electrical machine (10) according to Claim 5 or 6, wherein the ratio is 0.9% or less when a rated output is 500 kw or more and 5000 kw or less.

8. The rotating electrical machine (10) according to any one of Claims 1 to 7, wherein the high-voltage wire (C) is installed in the open slot (11b) in a fractional slot winding configuration in which the number of slots per pole per phase is a fraction.

# FIG. 1

| VOLTAGE | SLOT SHAPE | ROTATION |
|---|---|---|

ROTATING ELECTRICAL MACHINE

LOW VOLTAGE (600 V OR LESS)

SEMI-CLOSED

HIGH-SPEED ROTATION (500 rpm OR MORE)

HIGH VOLTAGE (MORE THAN 600 V)

OPEN

LOW-SPEED ROTATION (LESS THAN 500 rpm)

# FIG. 2

10

IIIA          IIIA          AX

g

11

12

13

Z
X        Y

# FIG. 3A

# FIG. 3B

SURFACE LOSS = Bg ∝ (f/p) ∝ GD ∝ N1 ∝ (S1/δ)

Bg: GAP MAGNETIC FLUX DENSITY
f: FREQUENCY
p: NUMBER OF POLES
GD: STATOR CORE INNER DIAMETER
N1: NUMBER OF SLOTS IN STATOR
S1: WIDTH OF SLOTS IN STATOR

# FIG. 4

# FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001028852 A